# EUROPEAN PATENT APPLICATION

(11) **EP 0 848 565 A2**
(43) Date of publication of application: **17.06.1998**
(21) Application number: 97119826.2
(22) Date of filing: 12.11.1997
(51) Int. Cl.: H04Q 7/24, H04Q 7/22, H04Q 7/28

(54) **Inter-networking system for specialized land mobile radio networks**

(30) Priority: 05.12.1996 US 761618
(71) Applicant: AT&T Corp., New York, NY 10013-2412 (US)
(72) Inventor: Chang, James Jen-Chei, Randolph, N.J. 07869 (US); Hsu, Danny K., Morristown, N.J. 07960 (US); Rappeport, Scott M., Randolph, N.J. 07869 (US)
(74) Representative: KUHNEN, WACKER & PARTNER

(57) **Abstract**

A portable radio access port adapted for coupling to a public switched telephone network (PSTN) and seen as a standard termination of the PSTN, advantageously receives radio communication from different land mobile radio networks via the PSTN and other wireless networks for creating a universal voice and data path between user terminals, the PSTN, and the other networks. The radio access port is frequency tunable to serve particular land mobile network users and can be easily transported to various geographic locations. In one exemplary embodiment, the radio port includes a radio transceiver for transmitting and receiving radio communication signals to and from the land mobile network user, an audio circuit port and tone circuit for extracting voice and dual tone multi-frequency (DTMF) signals modulated onto received radio signals and modulating voice and DTMF signals onto transmitted radio signals. A data port is included for extracting digital information modulated onto received radio signals and modulating digital information onto transmitted radio signals, and a line interface is included for connecting the radio port to the PSTN to enable transmission and reception of voice and data to and from the PSTN. A controller recognizes the voice and DTMF signals received from the radio signals and PSTN and directs operation of the radio port in response to given voice and DTMF signals received. A satellite radio modem may also be included for transmitting and receiving satellite radio signals, containing voice and data, to and from a satellite communications network and a cellular radio modem for transmitting and receiving cellular radio signals, containing voice and data, to and from a cellular communications network.

## Description

### Field of the Invention

The present invention relates generally to the field of communications and more particularly to the field of mobile radio communications.

### Background of the Invention

Today, because of unique frequency assignments or different air-interface protocols, land mobile terminal users are served via land mobile networks which, essentially, are isolated communications networks. Regarding security concerns, confidentiality of data or voice messages is easily maintained on such isolated networks. However, on special occasions, such as in the event of a natural disaster, isolated mobile network users, such as police, fire, federal agencies, etc., need to "reach out" beyond the isolated network to other isolated networks and to the Public Service Telephone Network (PSTN) on a selective basis.

Presently, in the event there is a need to communicate outside the isolated networks, mobile telephone users on the isolated networks are required to utilize special mobile terminals, instead of their own, to reach beyond the network. Aside from the obvious additional expense, this solution necessitates new equipment training and user inconvenience. An alternative approach suggests a fixed network solution which connects the mobile network user to the PSTN. However, this solution is inflexible and does not provide a connection directly to other wireless networks. Accordingly, there is a need for a system which provides universal voice/data connectivity between isolated land mobile users, which is both portable and does not require the use of new terminal equipment, and additionally enables connectivity with other wireless networks.

### Summary of the Invention

The present invention provides for a universal voice/data communications system for interconnecting isolated land mobile users with users of different land mobile radio networks and the PSTN. In one advantageous embodiment, the present invention is an interface device which includes a portable radio access port adapted to connect to a public switched telephone network (PSTN) as a landline termination of the PSTN. The radio access port is coupled to a radio port interface which can be frequency tuned selectively to a given land mobile network for establishing communication with a user of a particular land mobile communications network. The access port thereby provides a "plug-and-play" universal connection, as needed, through the PSTN or other network to enable communication with a user in a different land mobile network.

In one exemplary embodiment, the radio port includes a radio transceiver for transmitting and receiving radio communication signals to and from the land mobile network user, an audio circuit port and tone circuit for extracting voice and dual tone multi-frequency (DTMF) signals modulated onto received radio signals and modulating voice and DTMF signals onto transmitted radio signals. A data port is included for extracting digital information modulated onto received radio signals and modulating digital information onto transmitted radio signals, and a line interface is included for connecting the radio port to the PSTN to enable transmission and reception of voice and data to and from the PSTN. A controller recognizes the voice and DTMF signals received from the radio signals and PSTN and directs operation of the radio port in response to given voice and DTMF signals received. A satellite radio modem may also be included for transmitting and receiving satellite radio signals, containing voice and data, to and from a satellite communications network and a cellular radio modem for transmitting and receiving cellular radio signals, containing voice and data, to and from a cellular communications network.

### Brief Description of the Drawings

A more complete understanding of the present invention may be obtained from consideration of the following description in conjunction with the drawings in which:
FIG. 1 shows an exemplary assembly of isolated land mobile communications networks of the type contemplated for use with the present invention;
FIG. 2 shows a generalized block diagram depicting the manner in which the present invention interface device interconnects with established communications networks;
FIG. 3 shows a block diagram illustrating various components included for on exemplary embodiment of the present invention.

### Detailed Description

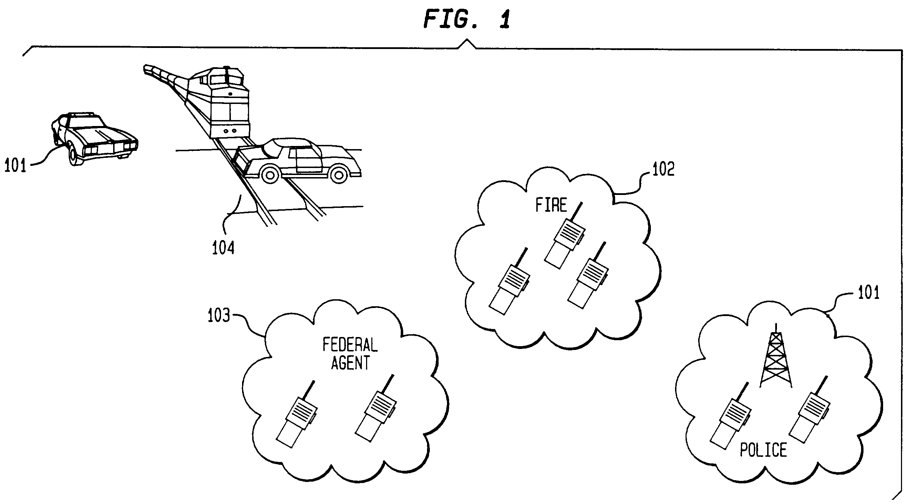

Referring to FIG. 1, there are shown representations of a number of isolated individual land mobile communication networks such as police 101, fire 102, and federal agency 103 networks, and an automatic train control system (ATCS) 104. As discussed previously, for many emergency situations, e.g., involving natural disasters, it is critical for these different land mobile users to communicate with each other and with other wireless or wireline networks, such as a public switched telephone network (PSTN), satellite network, or cellular network, using individual mobile terminals. Advantageously, as will be described, the present invention interface device utilizes a portable radio access port, either physically or by other known manner connected to a PSTN, to receive radio communications from different land mobile radio users and other wireless networks creating a universal voice and data path through the PSTN, and effectively, universal connectivity on an "as-needed" basis. Additionally, multiple communication network modems which may be present on the device allow immediate seamless, and quality voice and data communications with a variety of other wireless communication networks, e.g., satellite, cellular, etc.

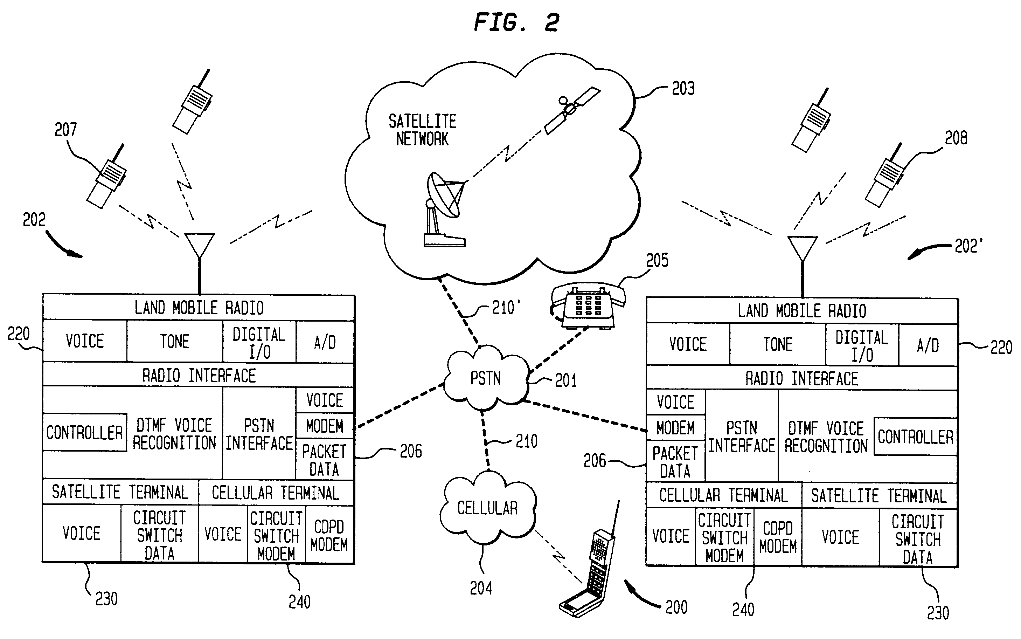

Referring now to FIG. 2 there is shown a generalized block diagram 200 illustrative of one exemplary manner in which the present invention interface device 206 interconnects with other networks. As shown, a PSTN 201 has a first land mobile communications system 202, a second land mobile communications system 202', a satellite communications network 203, and a cellular communications network 204 as adjunct, interconnected communication networks to the conventional landline telephone network. In order for an end user having a land mobile user terminal 207 and desiring to radio communicate with the various networks 202', 203, 204, the present invention comprises a portable land mobile radio access port 206 that can be easily transported to any particular geographic location where land mobile radio access is required. The radio access port 206 connects to the PSTN 201 in a known manner and is seen by the PSTN 201 as a standard termination of the landline network. The operation of the PSTN 201, satellite network 203, and cellular network 204 are well known to those skilled in the art and therefore need not be described in great detail.

In a typical situation for which the present invention is contemplated, a particular land mobile network user, such as those depicted in FIG. 1, by way of terminal 207 desires to communicate with a land mobile user 208 of a different (second) land mobile network 202'. As would be understood, the two different network users by way of their respective terminals 207 and 208 cannot communicate with each other using the same land mobile network infrastructure due to air-interface incompatibilities such as protocol and frequency. To establish a universal communications path, voice and data connectivity, with the second land mobile network 202' and to the satellite 203 and cellular 204 networks, a first land mobile network user interconnects the radio access port 206 to the PSTN 201, where the PSTN is also connected to the network infrastructure of the second land mobile network 202', for example, through a second radio access port 206'. After frequency tuning the radio port 206 to a desired frequency usable by the terminal 207, the first land mobile user can establish radio communications with users 208 of the second land mobile network 202' via the PSTN. Additionally, as will be explained, the first land mobile user 207 can communicate with the cellular 204 and satellite 203 communications networks which are connected to the PSTN 201, and with other conventional terminations of the landline network such as a standard telephone 205. In that case, as would be understood by a person skilled in the art, radio signals received from the first land mobile user 207 are appropriately adjusted to conform with a respective outbound wireless network air-interface protocol 210/210', and are then transmitted to the outbound wireless network such as the cellular network 204 or the satellite network 203. In the inbound direction of signal flow, a reverse process occurs wherein radio signals received from an external wireless network, e.g., satellite 203 and cellular 204, are appropriately adjusted to conform with the land mobile network air-interface protocol usable by the land mobile network 202 and then radio transmitted to the first land mobile user terminal 207. Accordingly, the present invention interface device may be utilized to provide plug-n-play, universal voice and data connectivity to a plurality of wireless or wireline interfaces which can be easily established in any particular geographic region having access to a PSTN infrastructure.

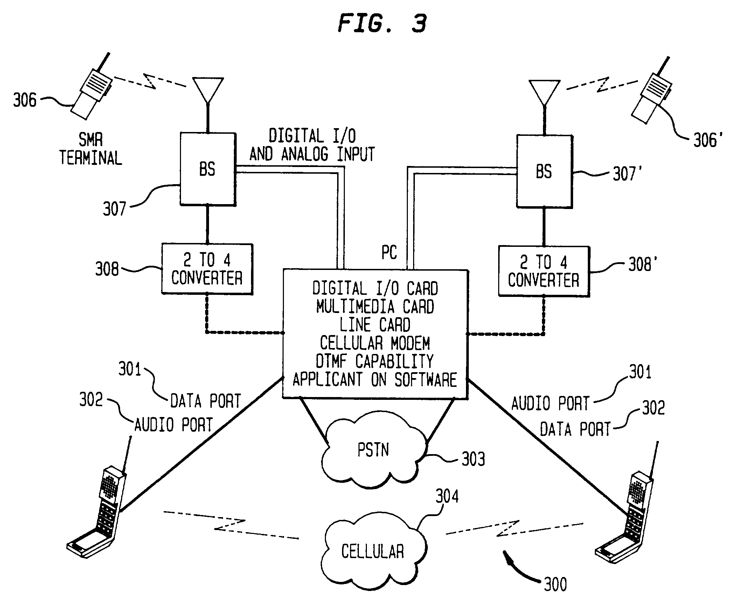

Referring now to FIG. 3, there is shown one exemplary embodiment of the present invention interface device 300, illustrating in greater detail the basic hardware and software components included therein. As shown, an audio port 301, digital I/O card (data port) 302, multimedia card, line card (PSTN interface), cellular modem, and satellite modem are contained in a port controller 305, which may be embodied in a personal computer-type device which runs off of appropriate applications specific software and which enables voice and data communications with the PSTN 201, land mobile, satellite, and cellular networks, including cellular digital packet data (CDPD) capability. The interconnection of these components in such a personal computer-type device would be understood to persons skilled in the art. In order to establish a land mobile network interface, the port controller 305 is connected, for example, to a base station 307/307' which transmits on a radio frequency (RF) to one or more mobile radio terminals 306/306 . As would be understood, 2 to 4 wire converters 308 facilitate dual tone multi-frequency (DTMF) signaling capability in the radio port controller 305, where the DTMF signaling is voiceband signaling by simultaneous transmission of two tones, one from a low frequency and one from a high frequency group. Each of these groups consists of four voiceband frequency tones, no two of which are harmonically related.

The radio port controller 305, via its multiple RF modems, can support voice, tone, and circuit switched packet data transmissions. The radio port controller 305 performs voice and DTMF tone recognition and operates the various radio port interfaces 220, 230 and 240 in response to particular voice, tone, and data signals received from the interfacing wireline and wireless networks 202', 203, 204.

Numerous modifications and alternative embodiments of the invention will be apparent to those skilled in the art in view of the foregoing description. For example, although the present invention is described using specific examples of interconnecting wireless and wireline networks, it is not deemed a departure from the spirit and scope of the present invention to substitute or add other types of wireline or wireless networks as interconnecting to the present invention. Accordingly, this description is to be construed as illustrative only and is for the purpose of teaching those skilled in the art the best mode of carrying out the invention. Details of the structure may be varied substantially without departing from the spirit of the invention and the exclusive use of all modifications which come within the scope of the appended claim is reserved.

## Claims

1. A communications network interface for coupling a land mobile radio network with a public switched telephone network (PSTN), said apparatus,
CHARACTERIZED BY:
an access port adapted to couple said communications network interface apparatus to said PSTN as a landline termination thereof, and
a radio port interface coupled to said access port, said radio port interface being frequency tunable to a frequency of said land mobile radio network for receiving radio communication signals from and transmitting radio communication signals to said land mobile radio network.

2. The network interface apparatus in accordance with claim 1, wherein said radio port interface includes a radio transceiver for transmitting and receiving radio communication signals to and from said land mobile radio network.

3. The network interface apparatus in accordance with claim 2, wherein said radio port interface includes an audio circuit port and tone circuit for extracting voice and DTMF signals modulated onto received radio signals and modulating voice and DTMF signals onto transmitted radio signals.

4. The network interface apparatus in accordance with claim 3, wherein said radio port interface includes a data port for extracting digital information modulated onto said received radio signals and modulating digital information onto said transmitted radio signals.

5. The network interface apparatus in accordance with claim 4, wherein said radio port access includes a line interface for connecting said communications network interface apparatus to said PSTN to thereby provide for transmission and reception of voice and data to and from said PSTN.

6. The network interface apparatus in accordance with claim 5, wherein said radio port interface includes a controller operable to recognize said voice and DTMF signals received via said radio signals and said PSTN and for directing operation of said radio port interface in response to predetermined ones of said voice and DTMF signals received.

7. The network interface apparatus in accordance with claim 6, further including a satellite radio modem, coupled to said radio port interface port, said satellite radio modem comprising means for transmitting and receiving satellite radio signals containing voice and data to and from a satellite communications network.

8. The radio port in accordance with claim 6, further including a cellular radio modem, coupled to said radio port interface, said cellular radio modem comprising means for transmitting and receiving satellite radio signals containing voice and data to and from a cellular communications network.

9. A method for providing radio signal connectivity between a first and second land mobile network, said method
CHARACTERIZED BY the steps of:
coupling a portable radio port interface to a public switched telephone network (PSTN);
transmitting radio signals from the first land mobile network to said first radio port interface, said radio port interface being frequency tunable to said radio signals transmitted by the first land mobile network; and
transmitting said radio signals from said radio port interface to said second land mobile network via said PSTN.

10. The method according to claim 9, further including the steps of:
coupling said PSTN to a second portable radio port interface;
receiving radio signals at said second land mobile network from said second radio port interface, said second radio port interface being frequency tunable to said radio signals receivable by the second land mobile network.

11. The method according to claim 9, further including the step of extracting voice and DTMF signals modulated onto the received radio signals and modulating voice and DTMF signals onto the transmitted radio signals at said radio port interface.

12. The method according to claim 9, further including the step of extracting digital information modulated onto the received radio signals and modulating digital information onto the transmitted radio signals.

13. The method according to claim 9, further including the step of establishing a communications path between the first land mobile network and a cellular communications network via said first radio port interface.

14. The method according to claim 13, wherein the communications path with the cellular communications network is established by receiving radio signals from the cellular communications network, and transmitting information received on said radio signals to the first land mobile network via said first radio port interface, said step of receiving the radio signals from the cellular communications network occurring after adjusting signals to conform to a receiving network air-interface protocol.

15. The method according to claim 14, wherein the step of establishing said communications path further includes the step of receiving radio signals from the first land mobile network and transmitting information received from the first land mobile network to the cellular communications network via said first radio port interface, said step of receiving the radio signals from the first land mobile network occurring after adjusting signals to conform to a receiving network air- interface protocol.

16. The method according to claim 9, further including the step of establishing a communications path between the first land mobile network and a satellite communications network via said first radio port interface.

17. The method according to claim 16, wherein the communications path is established by the step of receiving radio signals from the satellite communications network and transmitting information received on said radio signals to the first land mobile network and, the step of receiving the radio signals from the satellite communications network occurring after adjusting signals to conform to a receiving network air-interface protocol.

18. The method according to claim 17, wherein the step of establishing said communications path further includes the step of receiving radio signals from the first land mobile network and transmitting information received from the first land mobile network to the satellite communications network via said first radio port interface, the step of receiving radio signals from the first land mobile network occurring after adjusting signals to conform to a receiving network air-interface protocol.

19. The method according to claim 9, wherein said first radio port interface includes a radio transceiver for receiving and transmitting the radio signals from and to the first land mobile network.

20. The method according to claim 13, wherein said first radio port interface includes a cellular radio modem comprising means for receiving and transmitting cellular radio signals, containing voice and data, from and to said cellular communications network.

21. The method according to claim 16, wherein said first radio port interface includes a satellite radio modem comprising means for receiving and transmitting satellite radio signals, containing voice and data, from and to the satellite communications network.
